Europäisches Patentamt

European Patent Office

Office européen des brevets

(19)

(11) Veröffentlichungsnummer: **0 014 917**
**B1**

(12) # EUROPÄISCHE PATENTSCHRIFT

(45) Veröffentlichungstag der Patentschrift:
06.06.84

(21) Anmeldenummer: 80100646.1

(22) Anmeldetag: 08.02.80

(51) Int. Cl.³: **G 21 C 19/32**

(54) **Einrichtung zum absturzsicheren Transport von Lasten inner- und oberhalb von wassergefüllten Brennelementlagerbecken.**

(30) Priorität: 24.02.79 DE 2907324

(43) Veröffentlichungstag der Anmeldung:
03.09.80 Patentblatt 80/18

(45) Bekanntmachung des Hinweises auf die Patenterteilung:
06.06.84 Patentblatt 84/23

(84) Benannte Vertragsstaaten:
AT CH FR IT

(56) Entgegenhaltungen:
DE - A - 2 253 232
DE - A - 2 618 647
DE - A - 2 706 042
FR - A - 2 130 194
FR - A - 2 317 737
US - A - 3 945 509
US - A - 4 069 923

PATENTS ABSTRACTS OF JAPAN, Band 1, Nr. 1, 1. März 1977, Seite 25 M 56

(73) Patentinhaber: BROWN BOVERI REAKTOR GmbH,
Dudenstrasse 44, D-6800 Mannheim 1 (DE)

(72) Erfinder: Hennings, Uwe, Dipl.-Ing., Ortsstr 24,
D-6941 Steinklingen (DE)
Erfinder: Dose, Gerhard-Friedrich, Ing. grad.,
Goethestrasse 47, D-6942 Laudenbach (DE)

(74) Vertreter: Dahlmann, Gerhard, Dipl.-Ing. et al, c/o Brown Boveri & Cie., AG Zentralbereich ZPT Postfach 351, D-6800 Mannheim (DE)

BUNDESDRUCKEREI BERLIN

## Beschreibung

Die Erfindung betrifft eine Einrichtung zum absturzsicheren Transport von Lasten inner- und oberhalb von wassergefüllten Brennelementlagerbecken mittels Hebezeug.

Ausrüstungen für derartige Lagerbecken werden normalerweise im trockenen Zustand, d. h. vor Inbetriebnahme der Becken montiert. Es kann jedoch notwendig sein, Gestelle für Brennelemente oder andere schwere Güter oberhalb oder innerhalb eines Lagerbeckens zu bewegen, wenn dieses schon in Betrieb, d. h. mit Wasser gefüllt ist. Derartige »nasse Montage« sind z. B. erforderlich, wenn zum Zwecke einer Montage bzw. Demontage ein Ablassen des Beckenwassers z. B. aus Abschirmgründen nicht möglich ist.

Seither ist es trotz sorgfältiger Hebezeugauslegung und -benutzung nicht auszuschließen, daß die transportierten Lasten bei Versagen eines Hebezeugs in das Lagerbecken stürzen und folgenschwere Schäden an Lagerbeckenauskleidung oder -einbauten hervorrufen.

Es wurde zwar in der DE-OS 2 253 232 schon vorgeschlagen einen Brennelement-Transportbehälter absturzsicher zu transportieren. Dabei ist ein separater Schacht vorgesehen, der den Außenabmessungen des Transportbehälters angepaßt ist. Im Falle eines Versagens des Hebezeuges tritt ein Kolben-Zylinder-Effekt auf und bewirkt das Abbremsen des Transportbehälters. In der US-A-4 069 923 wird vorgeschlagen, eine in einem Schacht geführte, dort verbleibende be- und entlüftbare Hohlraumabsenkhilfe vorzusehen.

Mit dieser Einrichtung kann ein Transportbehälter nur in dem dafür vorgesehenen Schacht abgesenkt werden.

Demgegenüber ist es die Aufgabe der Erfindung, eine Absturzsicherung anzugeben, die keinen separaten Transportschacht benötigt und über dem gesamten Bereich eines Brennelementlagerbeckens eingesetzt werden kann.

Gelöst wird die Aufgabe erfindungsgemäß dadurch, daß das Hebezeug mit einer be- und entlüftbaren Tauchglocke verbunden ist, die mit ihrer Öffnung nach unten angeordnet ist und daß an der Tauchglocke Verbindungselemente für die Last vorgesehen sind. Mit dieser Einrichtung kann die Last an und von jeder Stelle des Brennelementlagerbeckens transportiert werden. Ein folgenschwerer Absturz ist ausgeschlossen.

In vorteilhafter Weise sind die Verbindungselemente derart, daß die Last mit einem vorgebbaren Maß in den Hohlraum der Tauchglocke hineinragt. Mit dieser Maßnahme wird sichergestellt, daß die Last vor der Tauchglocke auf dem Boden des Brennelementlagerbeckens aufsetzt.

Gemäß einer besonderen Ausgestaltung sind die Verbindungselemente für die Last in wasserdichter Ausführung an der Tauchglocke befestigt.

Eine Beeinflussung der Senkgeschwindigkeit durch unkontrollierten Luftein- oder -austritt in die Tauchglocke wird dadurch vermieden.

Über ein Ventil ist der Gasinhalt der Tauchglocke variierbar.

Anhand einer schematischen Zeichnung wird die Wirkungsweise der erfindungsgemäßen Einrichtung beschrieben. Ein in einer nicht dargestellten kerntechnischen Anlage angeordnetes Brennelementlagerbecken 1 weist einen Boden 2 und Seitenwände 3 auf und ist bis zur Linie 4 mit Wasser gefüllt. Das Wasser dient zur Abschirmung der darin gelagerten kontaminierten Lagergüter. Zur Aufnahme von Brennelementen sind am Boden 2 des Brennelementlagerbeckens 1 Gestelle 5 angeordnet. Ein Gestell 5a wird von der oberhalb des Brennelementlagerbeckens 1 strichpunktiert angegebenen Position in die am Boden 2 ebenfalls strichpunktiert angegebenen Position gebracht. Um bei einem unterstellten Versagen des Hebezeuges 6 ein Abstürzen des Gestellts 5a bis zum Boden 2 bzw. bis zur Oberkante der Einbauteile 5 zu verhindern ist erfindungsgemäß zwischen Hebezeug 6 und Gestell 5a eine Tauchglocke 7 angeordnet. Diese Tauchglocke ist ein nach einer Seite offener Hohlkörper der mit seiner offenen Seite nach unten über das Gestell 5a gestülpt ist. Das Gestell 5a ist über wasserdicht an der Tauchglocke angebrachte Verbindungselemente 8 an derselben hängend befestigt. Anschlagmittel 9 eines Hebezeuges 6 sind an Ösen 10 der Tauchglocke 7 angelenkt, so daß unter Zwischenschaltung der Tauchglocke 7 das Gestell 5a von dem Hebezeug 6 getragen wird. Bei einem Versagen des Hebezeuges während einer Position des Gestells 5a oberhalb der Linie 4 wird die Tauchglocke mit dem daran befestigten Gestell ein bestimmtes Maß in das Beckenwasser eintauchen und dann aufgrund des Luftinhalts im oberen Raum 13 der Tauchglocke bis zur Gleichgewichtslage von Last und Auftriebskraft nach oben steigen und eine schwimmende Lage einnehmen. Das Verhältnis Gewicht von Tauchglocke und Gestell zu Rauminhalt der Tauchglocke ist dabei so gewählt, daß die Tauchglocke mit dem daran befestigten Gestell bei einem Absturz aus der größtmöglichen Höhe über der Linie 4 nur so tief in das Beckenwasser eintaucht, daß bereits im Brennelementlagerbecken angeordnete Bauteile nicht berührt werden. Sobald bei einem normalen Absenkvorgang die Tauchglocke soweit in das Beckenwasser eingetaucht ist, daß das Luftpolster im Raum 13 der Tauchglocke gebildet ist, wird über Fernsteuerung das Ventil 11 so weit geöffnet, daß beim weiteren Absenken der Luftinhalt der Tauchglocke kontrolliert vermindert wird. Beim Aufsetzen des Gestells 5a auf dem Boden 2 wird der restliche Luftinhalt aus der Tauchglocke über das Ventil 11 entlastet. Die Verbindungselemente 8 werden dann fernbedient von Gestell 5a gelöst und die Tauchglocke 7 wird mit dem Hebezeug 6 aus dem Lagerbecken entfernt. Versagt das Hebezeug an irgend einer Stelle des unter Wasser zurückzulegenden Transportweges, so sinkt die Tauchglocke mit dem Gestell 5a langsam und gefahrlos zum Boden 2.

Soll ein Gestell 5, 5a aus dem Lagerbecken entfernt werden, wird die Tauchglocke 7 mit dem Hebezeug 6 ins Lagerbecken hinabgesenkt, unter Wasser über das am Boden 2 angeordnete Gestell gestülpt und die Verbindungselemente 8 an das zu entnehmende Gestell angekoppelt. Alsdann wird über einen Schlauch 12 der mit einem nicht dargestellten Behälter verbunden ist und über das Ventil 11 ein Luftpolster in Raum 13 der Tauchglocke 7 aufgebaut, bis die Last fast im hydrostatischen Gleichgewicht ist. Die Tauchglocke mit dem Gestell wird mit Hilfe des Hebezeuges angehoben und aus dem Lagerbecken entfernt.

Mit der erfindungsgemäßen Einrichtung wurde für Montage und Demontage von Gestellen oder anderen Bauteilen in oder aus wassergefüllten Brennelementlagerbecken eine einfach aufgebaute Absturzsicherung geschaffen.

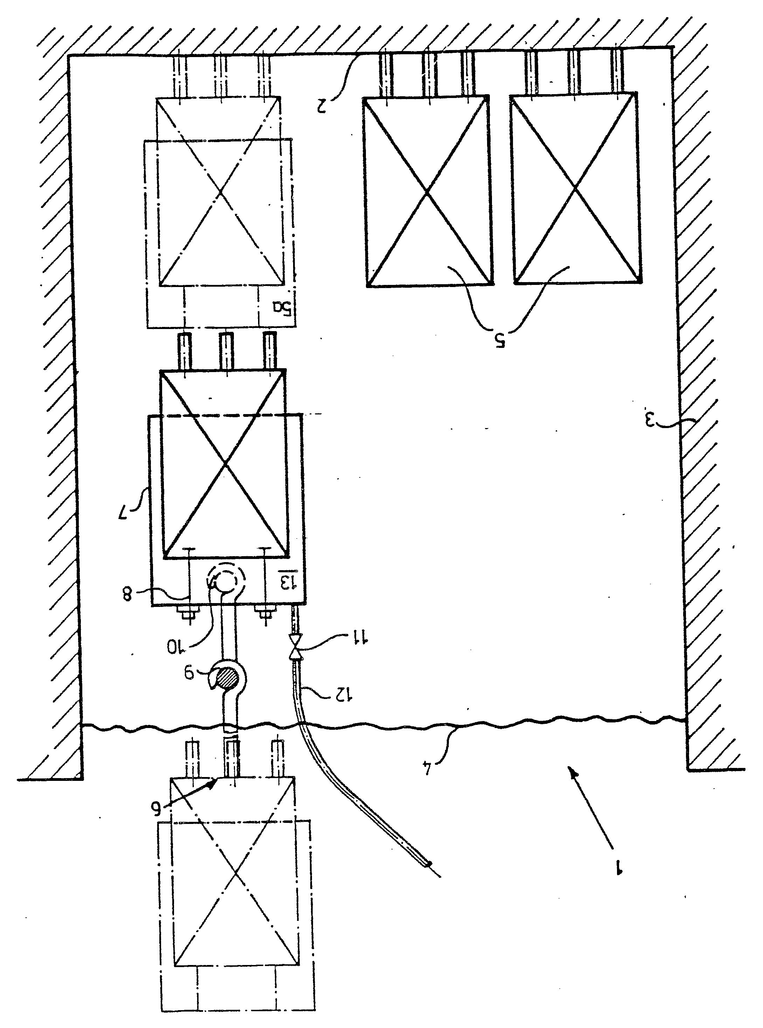

### Patentansprüche

1. Einrichtung zum absturzsicheren Transport von Lasten innerhalb und oberhalb von wassergefüllten Brennelementlagerbecken mittels Hebezeug, dadurch gekennzeichnet, daß das Hebezeug (6) mit einer be- und entlüftbaren Tauchglocke (7) verbunden ist, die mit ihrer Öffnung nach unten angeordnet ist und daß an der Tauchglocke (7) Verbindungselemente (8) für die Last (5) vorgesehen sind.

2. Einrichtung nach Anspruch 1, dadurch gekennzeichnet, daß die Verbindungselemente (8) derart sind, daß die Last (5) mit einem vorgebbaren Maß in den Hohlraum der Tauchglocke (7) ragt.

3. Einrichtung nach Anspruch 1 und 2, dadurch gekennzeichnet, daß die Verbindungselemente (8) für die Last (5) in wasserdichter Ausführung an der Tauchglocke (7) befestigt sind.

4. Einrichtung nach Anspruch 1, dadurch gekennzeichnet, daß der Gasinhalt (13) der Tauchglocke (7) mit Hilfe eines Ventils (11) variierbar ist.

### Claims

1. A device for transporting loads inside and above water-filled fuel storage pools by means of hoists in a way which precludes any dropping of the load, characterized in that the hoisting gear (6) is connected to a diving bell (7) to which air can be admitted and from which air can be extracted, that the opening of the diving bell (7) is facing downward, and that means (8) for attaching the load (5) are provided at the diving bell (7).

2. A device as per claim 1, characterized in that the means for load attachment (8) are designed such that the load (5) protrudes into the hollow space of the diving bell (7), and that the extent of protrusion can be controlled.

3. A device as per claims 1 and 2, characterized in that the means (8) for attaching the load (5) are of waterproof design and fixed at the diving bell (7).

4. A device as per claim 1, characterized in that the gas volume (13) of the diving bell (7) can be varied by means of a valve (11).

### Revendications

1. Dispositif pour le transport, préservé de chutes, de charges à l'intérieur et au-dessus de piscines emplies d'eau de stockage d'éléments combustibles, à l'aide d'un instrument de levage, caractérisé par le fait que l'instrument de levage (6) est relié à une cloche de plongée (7) pouvant être emplie d'air et purgée, et dont l'ouverture est dirigée vers le bas; et par le fait que des organes (8) de liaison de la charge (5) sont prévus sur la cloche de plongée (7).

2. Dispositif selon la revendication 1, caractérisé par le fait que les organes de liaison (8) sont réalisés de telle sorte que la charge (5) pénètre dans la cavité de la cloche de plongée (7) d'une distance pouvant être prédéterminée.

3. Dispositif selon les revendications 1 et 2, caractérisé par le fait que les organes (8) de liaison de la charge (5) sont fixés à la cloche de plongée (7) en étant réalisés étanches à l'eau.

4. Dispositif selon la revendication 1, caractérisé par le fait que le volume de gaz (13) renfermé par la cloche de plongée (7) peut être modifié à l'aide d'une valve (11).